(19) Europäisches Patentamt
European Patent Office
Office européen des brevets

(11) EP 0 863 473 A1

(12) DEMANDE DE BREVET EUROPEEN

(43) Date de publication:
09.09.1998 Bulletin 1998/37

(51) Int Cl.⁶: G06F 17/60
// B64G3/00

(21) Numéro de dépôt: 98400522.3

(22) Date de dépôt: 05.03.1998

(84) Etats contractants désignés:
AT BE CH DE DK ES FI FR GB GR IE IT LI LU MC NL PT SE
Etats d'extension désignés:
AL LT LV MK RO SI

(30) Priorité: 06.03.1997 FR 9702675

(71) Demandeur: ALCATEL ALSTHOM COMPAGNIE GENERALE D'ELECTRICITE
75008 Paris (FR)

(72) Inventeurs:
• Fabre, Benoît
  91160 Longjumeau (FR)
• Noreils, Fabrice
  91400 Orsay (FR)
• Berger, Marie
  75012 Paris (FR)

(74) Mandataire: Fournier, Michel Robert Marie et al
COMPAGNIE FINANCIERE ALCATEL
Département Propriété Industrielle
30, avenue Kléber
75116 Paris (FR)

(54) **Procédé de planification de requêtes d'un satellite par recuit simulé contraint**

(57) La présente invention est un procédé itératif permettant d'établir un plan de requêtes pour un satellite d'observation. Un plan consiste en une succession de requêtes auxquelles sont associées des pluralités d'opportunités de satisfaction de ces requêtes. Le plan doit par ailleurs respecter une pluralité de contraintes.

Chaque itération k du procédé itératif est composée des étapes suivantes :

• choix d'une nouvelle opportunité,
• élaboration d'un plan provisoire à partir du plan précédent k-1 calculé à l'itération précédente et de cette nouvelle opportunité,
• vérification du respect de la pluralité de contraintes par le plan provisoire,
• évaluation de la qualité du plan provisoire,
• détermination si le plan provisoire doit être entériné comme plan k en fonction de la qualité du plan provisoire et de la qualité du plan précédent k-1.

Le procédé se caractérise en ce que la détermination de l'entérinement du plan provisoire se fait par une métaheuristique probabiliste de type recuit simulé, ainsi que par la règle de construction du plan provisoire en fonction de la nouvelle opportunité choisie.

**Description**

La présente invention concerne un procédé de planification des différentes requêtes de prises de vue que doit remplir un satellite d'observation équipé de différents capteurs (radar, infrarouge ou optique).

Une requête de prise de vue est une demande particulière provenant d'un certain client et concernant une observation particulière (c'est-à-dire, une photographie d'une région déterminée de la Terre).

Les satellites d'observations sont en général défilants, c'est-à-dire qu'ils possèdent une périodicité orbitale de sorte qu'une même région de la Terre est susceptible d'être observée par un même satellite à plusieurs moments distincts. Dans la suite, on appellera « opportunité » chacune des possibilités dont dispose un satellite pour réaliser une requête donnée.

Une requête peut consister à prendre plusieurs photographies d'une même région, ceci dans le but d'en construire une vue stéréoscopique par exemple. Il devient alors nécessaire de satisfaire plusieurs opportunités de la même requête pour que celle-ci soit satisfaite. Dans la suite, on dira d'une requête qu'elle est saturée en opportunités lorsque l'ensemble des photographies demandées est planifié.

Par ailleurs, il existe un certain nombre de contraintes interdisant certaines opportunités.

Tout d'abord, le client demandant une requête précise généralement une date limite avant laquelle il désire que sa requête soit réalisée. De ce fait, le nombre d'opportunités pour une requête donnée se trouve limité.

De la même façon. on peut savoir *a priori* que certaines opportunités seront impossibles à remplir du fait de mauvaises conditions météorologiques. Cette contrainte n'a d'incidences que pour les capteurs optiques.

De plus, un satellite peut avoir des requêtes correspondant à des observations de régions très voisines de la Terre. Du fait du nombre limité de capteurs embarqués, il ne pourra pas forcément traiter toutes ces observations. Par conséquent, une partie de ces requêtes devra être traité ultérieurement, lorsque le satellite repassera au-dessus de la zone concernée. Autrement dit, le choix d'une opportunité particulière d'une requête invalide des opportunités pour d'autres requêtes.

Par ailleurs, le satellite doit communiquer les images prises aux stations terrestres de télémesure. Les communications entre le satellite et la station ne sont possibles que pendant une durée dite de visibilité, réduite. Elles ont, de plus, des débits limités, de sorte que le satellite doit contenir une mémoire servant de tampon en mémorisant les données devant être transmises. Comme le poids d'un satellite est un critère majeur, cette mémoire est limitée et, par conséquent, certaines opportunités de requêtes deviennent impossibles à honorer lorsque la disponibilité mémoire est insuffisante.

Une contrainte supplémentaire peut être de ne communiquer les données résultant d'une requête que vers une station située sur le territoire du pays ayant commandité la requête. En effet, certaines requêtes peuvent revêtir un caractère confidentiel (observations de sites militaires par exemple) et ne doivent être retransmises que sur des sites agréés par le commanditaire.

Une autre contrainte peut être aussi la répartition des requêtes réalisées en fonction du client et de la participation financière que le client a investie dans le satellite. La proportion de requêtes réalisées par nationalités doit correspondre approximativement à la proportion des investissements consentis par ces nations.

Le problème de planification que se propose de résoudre la présente invention consiste à trouver un ordonnancement des différentes requêtes qui optimise un critère d'évaluation donné (nombre de requêtes planifiées, surface totale correspondant aux requêtes planifiées, volume total correspondant aux requêtes planifiées...) tout en tenant compte des différentes contraintes.

D'une façon générale, un tel problème de planification fait parti de la classe des problèmes dits « NF-complets ». Pour une présentation complète des problèmes NP-complets, le lecteur pourra se référer à l'ouvrage «Intelligence Artificielle et Informatique Théorique » de Jean-Marc Alliot et Thomas Schiex paru chez Cépaduès Éditions, et, plus particulièrement, son chapitre 11 traitant de la théorie de la complexité, ou dans l'ouvrage en langue anglaise « *Computers and Intractability: a guide to the theory of NP-completeness*» de Garey et Johnson aux éditions Freeman, 1979.

Il est toutefois important de noter qu'un problème d'un tel type possède une complexité croissant de façon non polynomiale avec la taille du problème, c'est-à-dire dans ce cas d'espèce, avec le nombre d'opportunités à planifier.

Par conséquent, le problème se ramène à la recherche d'une bonne solution et non de la meilleure solution.

Il serait vain de dresser une liste exhaustive des très nombreuses méthodes cherchant à résoudre des problèmes de ce genre. On peut toutefois citer à titre d'exemple les approches de type «propagation de contraintes» qui ont été appliquées à la planification de requêtes d'un satellite d'observation. Le lecteur pourra par exemple se référer l'article *«Exact and Approximate Methods for the Daily Management of an Earth Observation Satellite »* de J.C. Agnèse, N. Bataille, D. Blumstein, E. Bensana et G. Verfaillie *in «Artificial Intelligence and Knowledge Based Systems for Space - 5<sup>th</sup> Workshop »,* publication de l'Agence Spatiale Européenne.

On peut citer aussi le cas du satellite d'observation SPOT pour lequel la planification est faite par un système expert.

Toutefois, ces différentes solutions ne donnent pas de très bons plans (c'est-à-dire que le nombre de requêtes planifiées n'est pas très élevé) et surtout elles demandent énormément de temps de calcul avant de donner un plan acceptable. Par exemple, une implémentation d'une méthode de type propagation de contraintes ne donne qu'au bout de plusieurs heures de calcul, un plan qui réalise environ 70% des requêtes parmi un ensemble de 10000 requêtes et de 200000 opportunités.

La but de la présente invention est de proposer un procédé qui donne un plan de requêtes de qualité supérieure à ceux connus dans un temps plus court. Typiquement, sur le même exemple que celui mentionné ci-dessus, le procédé conforme à l'invention donne un plan satisfaisant environ 80% des requêtes en quelques minutes seulement sur un ordinateur de type classique.

De plus, dans la mesure où le procédé selon l'invention est suffisamment rapide, il devient possible de générer des plans sur un horizon de plusieurs mois, ce qui a notamment comme avantage d'améliorer la qualité du plan.

Le procédé conforme à l'invention est un procédé itératif dans lequel chaque itération k est composée des étapes suivantes :

- choix d'une nouvelle opportunité,
- élaboration d'un plan provisoire à partir du plan k-1 calculé à l'itération précédente et de ladite nouvelle opportunité,
- vérification du respect des contraintes par ledit plan provisoire,
- évaluation de la qualité dudit plan provisoire,
- détermination si le plan provisoire doit être entériné comme plan k en fonction de la qualité dudit plan provisoire et de la qualité dudit plan k-1 calculé à l'itération précédente,

le procédé se caractérisant en ce que la détermination de l'entérinement dudit plan provisoire se fait par une métaheuristique probabiliste de type recuit simulé.

Comme pour tout procédé itératif, il est important de préciser la condition initiale du procédé ainsi que la ou les conditions d'arrêt.

Préférentiellement, le plan initial est un plan vide, mais il est possible de précalculer un plan initial non vide avant d'appliquer sur celui-ci l'algorithme évoqué ci-dessus.

Les conditions d'arrêt de l'algorithme sont constituées de conditions classiques pour ce type d'algorithmes itératifs comme, par exemple, le temps de traitement, le nombre d'itérations ou le passage en dessous d'un certain seuil de la différence en valeur absolue de la qualité du plan à l'itération k et de la qualité du plan à l'itération k-1.

On peut de plus ajouter des conditions propres au recuit simulé comme par exemple le passage au-dessous d'un certain seuil (différent du premier) de la température. La notion de température sera explicitée par la suite.

Il est bien sûr possible d'utiliser d'autres conditions d'arrêt ou de combiner plusieurs d'entre elles, tout en restant dans le cadre de la présente invention.

L'invention, ses caractéristiques et ses avantages apparaîtront de façon plus claire dans la description qui suit en liaison avec les figures évoquées ci-dessous :

La figure 1 représente une représentation très schématique du procédé conforme à l'invention.
La figure 2 illustre sur un exemple le principe général du recuit simulé (courbe d'une fonction à optimiser)

De façon générale, le recuit simulé est une métaheuristique s'appliquant à tout algorithme résolvant un problème de façon itérative et qui peut être réduit à un problème d'optimisation d'une fonction d'une ou de plusieurs variables.

En d'autres termes, le recuit simulé peut être vu comme une méthode de contrôle d'un algorithme itératif.

Le principe général en est d'accepter une solution $S_{k+1}$ même si cette nouvelle solution n'est pas meilleure que la précédente solution $S_k$ en fonction d'une loi probabiliste qui décroît avec le temps.

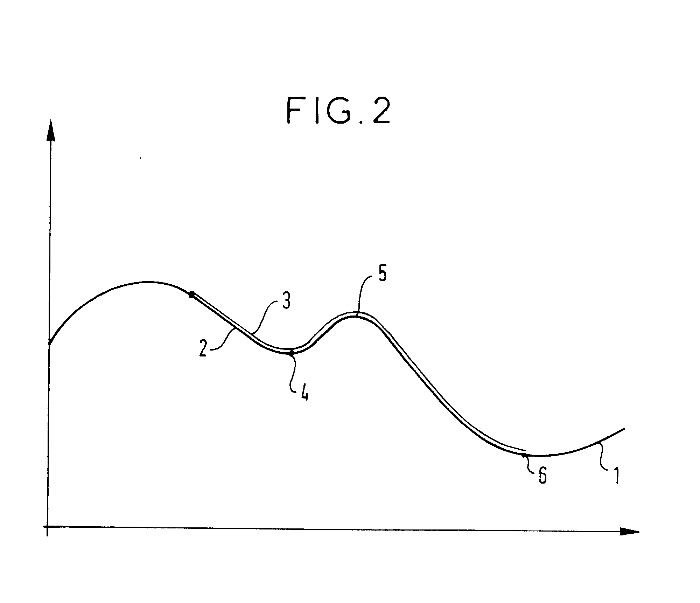

Le principe du recuit simulé peut être assez aisément compris au regard de l'exemple illustré par la figure 2. Le problème posé est ici de trouver le minimum d'une fonction 1.

Une première approche consiste à effectuer une descente de gradient, c'est-à-dire à partir d'un point donné (éventuellement de façon aléatoire) et de choisir à partir de ce point la direction dans laquelle la descente est maximale. La référence 2 indique le trajet effectué par les solutions successives selon cette approche.

On remarque que le procédé reste bloqué dans un minimum local 4 puisque de chaque coté de ce minimum le gradient est positif.

La méthode de type recuit simulé servant d'illustration a un comportement globalement similaire et descend, elle aussi, le gradient de la courbe 1. Mais, arrivé dans le minimum local 4, et en vertu de la règle énoncée ci-dessus, une solution moins bonne a des chances d'être acceptée : autrement dit, il existe une probabilité pour que la courbe 3 représentant les solutions de la méthode mettant en oeuvre un recuit simulé, remonte la courbe et s'échappe du minimum local 4 pour trouver une meilleure solution 6 en franchissant une crête 5.

Cette méthode est abondamment décrit dans la littérature scientifique, et le lecteur cherchant à approfondir les techniques de type « recuit simulé » peut se reporter par exemple à l'ouvrage : « *Simulated Annealing and Boltzmann Machine : A Stochastic Approach to Combinatorial Optimization Neural Computing* » de Emile Aarts et Jan Korst aux éditions John Wiley, and Sons.

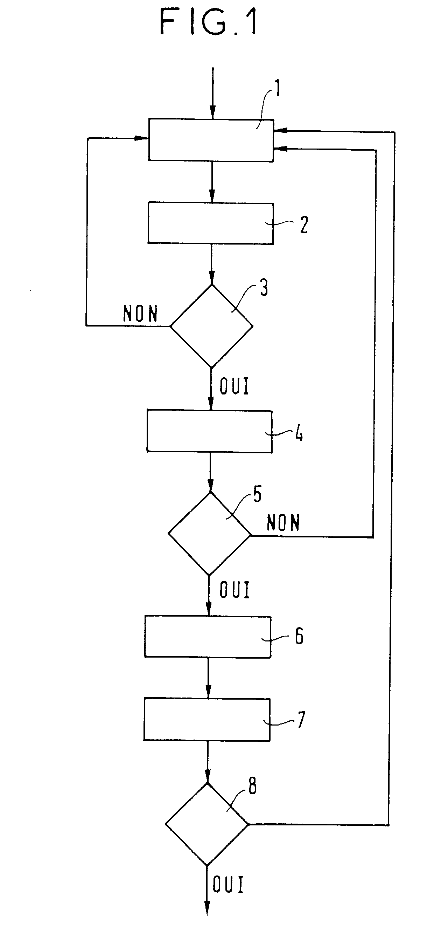

Dans notre cas, le procédé va consister à optimiser une fonction mesurant la qualité du plan. Cette fonction de qualité E (encore appelée « énergie » ou « coût ») est calculée lors de l'étape référencée 4 sur la figure 1. Elle peut s'exprimer comme suit :

$$E_k = \alpha.N_{\text{requêtes}} + \beta.S_{\text{total}} + \chi.V_{\text{total}}$$

où $E_k$ est la fonction de qualité à l'itération k,
$N_{\text{requêtes}}$ est le nombre de requêtes honorées,
$S_{\text{total}}$ est la surface totale des requêtes honorées,
$V_{\text{total}}$ est le volume total des requêtes honorées,

Les paramètres $\alpha$, $\beta$ et $\chi$ sont fixés par l'utilisateur. Cette expression de la fonction de coût n'est donnée qu'à titre indicatif, et l'homme du métier est en mesure de donner des formulations et des critères de mesure de la qualité d'un plan différents sans pour cela sortir de la portée de la présente invention.

L'étape référencée 5 constitue le coeur même de la méthode du recuit simulé. Elle consiste déterminer si l'on accepte ou non le plan provisoire en fonction, notamment, d'une loi probabiliste. Deux cas se présentent :

• La qualité $E_p$ du plan provisoire est supérieure à la qualité $E_{k-1}$ du plan précédemment calculé à l'itération k-1 : dans ce cas, le plan provisoire est accepté et devient le plan k.
• La qualité $E_p$ du plan provisoire est inférieure à la qualité $E_{k-1}$ du plan précédemment calculé à l'itération k-1 : dans ce cas la probabilité selon laquelle le plan est tout de même accepté et devient le plan k, est donnée par l'expression suivante :

$$P = e^{\frac{\Delta}{T}}$$

où $\Delta = E_p - E_{k-1}$ ($\Delta < 0$) et T est une grandeur appelée, de façon classique, température par référence à la loi de Boltzman dans le domaine de la physique statistique, domaine d'où est inspirée la métaheuristique du recuit simulé.

L'étape référencée 6 est l'étape d'acceptation proprement dite du plan provisoire. Cette étape n'est effectuée qu'en fonction de la détermination qui est faite à l'étape 5 précédente.

L'étape référencée 7 consiste à faire décroître la température T, de façon monotone vers 0. Préférentiellement, T décroît par palier, par exemple par multiplication par 0.99 après un certain nombre d'itérations. De sorte, la probabilité P tend vers 0 (car $\Delta$ est négatif dans le cas considéré) et, par conséquent, plus le nombre d'itérations augmente, moins une opportunité détériorant le plan aura de chance d'y être incorporée. On aboutit ainsi à une stabilisation de l'algorithme au bout d'un certain nombre d'itérations.

Comme nous l'avons dit précédemment, la technique du recuit simulé est une métaheuristique, c'est-à-dire une méthode de contrôle d'un algorithme itératif. Elle ne définit pas l'algorithme proprement dit et, en particulier, elle ne précise pas comment le plan provisoire doit être élaboré à partir du plan précédent (k-1).

La référence 1 indique une première étape qui consiste à choisir une opportunité dans l'ensemble des opportunités. Ce choix est fait préférentiellement de façon aléatoire.

La référence 2 désigne l'étape d'élaboration du plan provisoire à partir du plan précédent (d'indice k-1) et de l'opportunité choisie.

Selon une mise en oeuvre préférentielle de l'invention, une telle étape est conforme au procédé suivant :

• si l'opportunité fait déjà partie du plan (i.e. elle a déjà été choisie) alors le plan provisoire est égal au plan précédent k-1 moins cette opportunité,
• si l'opportunité ne fait pas déjà partie du plan et si la requête correspondante n'est pas saturée en opportunités alors le plan provisoire est égal au plan précédent k-1 auquel on ajoute cette opportunité,
• si l'opportunité ne fait pas déjà partie du plan mais si la requête correspondante est saturée en opportunités alors le plan provisoire est égal au plan précédent k-1 auquel on ajoute cette opportunité et auquel on retire une autre opportunité correspondante à la même requête.

De façon préférentielle, l'opportunité retirée est la première (chronologiquement) a avoir été incorporée dans le plan. On pourrait aussi choisir l'opportunité à retirer de façon aléatoire, par exemple.

La référence 3 désigne une étape de vérification des contraintes.

Très souvent, les algorithmes mettant en oeuvre une technique de type recuit simulé ne sont pas contraints mais, au contraire, relaxés. Cela signifie que l'on s'autorise à choisir, à une itération k, un plan ne satisfaisant pas l'ensemble des contraintes.

Cependant, dans le cadre de l'invention, l'algorithme doit être contraint pour plusieurs raisons :

• C'est la seule façon d'être assuré d'obtenir *in fine* un plan satisfaisant les contraintes, ce qui est une condition essentielle du problème posé.
• D'autre part, cela permet d'avoir un plan satisfaisant les contraintes à chaque itération. Il est ainsi possible à l'utilisateur de stopper le déroulement de l'algorithme à tout instant, tout en étant assuré d'obtenir un plan qui, bien que non complètement optimisé, satisfera l'ensemble des contraintes.

Dans le cas où l'opportunité choisie ne permet pas de construire un plan satisfaisant l'ensemble des contraintes, l'algorithme revient à l'étape 1 de choix d'une opportunité.

L'étape 8 consiste à tester si une nouvelle itération de l'algorithme doit être entreprise ou non. Cette décision se fait par l'intermédiaire d'une combinaison des tests suivants :

- la température est inférieure à un certain seuil,
- la valeur absolue de la différence entre la qualité dudit plan provisoire et la qualité dudit plan précédent k-1 est inférieure à un autre seuil,
- le nombre d'itération est supérieur à un troisième seuil,
- le temps de calcul depuis le déclenchement dudit procédé itératif est supérieur à un quatrième seuil,
- un compteur d'échec est supérieur à un cinquième seuil. Ce compteur d'échec est incrémenté d'une unité à chaque fois qu'une opportunité choisie ne permet pas de construire un plan satisfaisant l'ensemble des contraintes. et est remis à zéro à chaque fois qu'une opportunité choisie conduit à un plan valide vis à vis des contraintes.

Il est par ailleurs possible de mettre en oeuvre un mécanisme permettant à l'algorithme de s'arrêter sur requête de l'utilisateur. Comme nous l'avons vu, à chaque itération, le plan courant est un plan valide vis-à-vis des contraintes. cependant il n'est pas optimisé. Aussi, selon une mise en oeuvre de l'invention, la requête d'arrêt de l'utilisateur force la mise à zéro de la température. Par suite, l'algorithme va se stabiliser dans le plus proche minimum local de la fonction de coût. Il s'agit là d'un compromis entre le temps d'exécution et la qualité du plan obtenu par l'utilisateur.

Comme il a été mentionné précédemment, une mise en oeuvre préférentielle du procédé conforme à l'invention consiste à itérer en partant d'un plan initialement vide. Cependant, il est possible de partir d'un plan non vide, ceci afin d'améliorer la qualité du plan obtenu en fin de processus ou bien la vitesse de convergence vers la solution.

Une technique de construction d'un tel plan initial consiste par exemple en les étapes suivantes :

- classement des requêtes selon un certain critère,
- pour chaque requête, classement des opportunités selon un certain critère,
- construction du plan initial en prenant dans l'ordre les requêtes et en mettant pour chaque requête, autant d'opportunités dans le plan initial qu'il est nécessaire pour saturer la requête, en choisissant les opportunités conformément au classement précédemment fait, et en veillant à ce que chaque nouvelle opportunité introduite dans le plan soit conforme à toutes les contraintes.

**Revendications**

1. Procédé itératif permettant d'établir un plan de requêtes pour un satellite d'observation, ledit plan consistant en une succession de requêtes auxquelles sont associées des pluralités d'opportunités et devant respecter une pluralité de contraintes, ledit procédé itératif démarrant d'un plan initial, chaque itération k dudit procédé itératif étant composée des étapes suivantes :

- choix d'une nouvelle opportunité,
- élaboration d'un plan provisoire à partir du plan précédent k-1 calculé à l'itération précédente et de ladite nouvelle opportunité,
- vérification du respect de ladite pluralité de contraintes par ledit plan provisoire,
- évaluation de la qualité dudit plan provisoire,
- détermination si le plan provisoire doit être entériné comme plan k en fonction de la qualité dudit plan provisoire et de la qualité dudit plan précédent k-1,

ledit procédé s'arrêtant lorsque des conditions d'arrêt sont remplies, **caractérisé en ce que** la détermination de l'entérinement dudit plan provisoire se fait par une métaheuristique probabiliste de type recuit simulé.

2. Procédé itératif conforme à la revendication 1 **caractérisé en ce que** l'élaboration dudit plan provisoire se fait de la façon suivante :

- si ladite nouvelle opportunité fait déjà partie dudit plan provisoire alors ledit plan provisoire est égal audit plan précédent k-1 moins ladite nouvelle opportunité,
- si ladite nouvelle opportunité ne fait pas déjà partie dudit plan provisoire et si la requête correspondante n'est pas saturée en opportunités alors ledit plan provisoire est égal audit plan précédent k-1 auquel on ajoute ladite nouvelle opportunité,
- si ladite nouvelle opportunité ne fait pas déjà partie dudit plan provisoire mais si la requête correspondante est saturée en opportunités alors ledit plan provisoire est égal audit plan précédent k-1 auquel on ajoute ladite nouvelle opportunité et auquel on retire une autre opportunité correspondante à la même requête.

3. Procédé itératif conforme à la revendication précédente, **caractérisé en ce que** ladite autre opportunité est la première, chronologiquement, à avoir été incorporée dans ledit plan provisoire.

4. Procédé itératif conforme à l'un des revendications précédentes, **caractérisé en ce que** ledit plan initial est un plan vide.

5. Procédé itératif conforme à l'une des revendications 1 à 3, **caractérisé en ce que** ledit plan initial est constitué par un procédé comportant les étapes suivantes :

- classement des requêtes selon un certain critère,
- pour chaque requête, classement des opportunités selon un certain critère,
- construction dudit plan initial en prenant dans l'ordre les requêtes et en mettant pour chaque requête, autant d'opportunités dans ledit plan initial qu'il est nécessaire pour saturer ladite requête, en choisissant lesdites opportunités conformément au classement précédemment fait, et en veillant à ce que chaque nouvelle opportunité introduite dans le plan soit conforme à ladite pluralité de contraintes

6. Procédé itératif selon l'une quelconque des revendications précédentes, **caractérisé en ce qu'**à la suite d'une requête d'arrêt de l'utilisateur, ladite température est forcée à 0.

# FIG.1

FIG.2

# EP 0 863 473 A1

Office européen
des brevets

**RAPPORT DE RECHERCHE EUROPEENNE**

Numéro de la demande

EP 98 40 0522

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | W.T. SCHERER ET AL: "Combinatorial Optimization for Spacecraft Scheduling" PROCEEDINGS OF THE 4TH INTERNATIONAL CONFERENCE ON TOOLS WITH ARTIFICIA INTELLIGENCE (TAI), ARLINGTON, 10 - 13 novembre 1992, IEEE, pages 120-127, XP000357245 * page 120, colonne de gauche, dernier alinéa - colonne de droite, alinéa 1 * * page 122, colonne de gauche, dernier alinéa - colonne de droite, alinéa 1 * --- | 1 | G06F17/60 //B64G3/00 |
| D,A | J.C. AGNESE ET AL: "Exact and approximate methods for the daily management of an Earth observation satellite" PROCEEDINGS OF 5TH WORKSHOP FOR ARTIFICIAL INTELLIGENCE AND KNOWLEDGE BASED SYSTEMS FOR SPACE, NOORDWIJK, NETHERLANDS, 10 - 11 octobre 1995, ESA, PARIS, FR, pages 93-107, XP002046523 * le document en entier * --- | 1-6 | |
| A | C. PRINS: "Deux Problèmes d'Ordonnancement en télécommunications par Satellite" REVUE FRANCAISE D'INFORMATIQUE ET DE RECHERCHE OPERATIONELLE SERIE VERTE, vol. 25, no. 3, 1991, pages 341-358, XP000677576 * page 354, colonne 357 * --- -/-- | 1 | **DOMAINES TECHNIQUES RECHERCHES (Int.Cl.6)** G06F B64G |

Le présent rapport a été établi pour toutes les revendications

| Lieu de la recherche | Date d'achèvement de la recherche | Examinateur |
|---|---|---|
| LA HAYE | 5 juin 1998 | Pottiez, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

# EP 0 863 473 A1

**Office européen des brevets**

## RAPPORT DE RECHERCHE EUROPEENNE

Numéro de la demande

EP 98 40 0522

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | M. S. BODDY ET AL: "Planning applications in image analysis" ROBOTICS AND COMPUTER INTEGRATED MANUFACTURING, vol. 11, no. 2, juin 1994, page 105-110 XP004011782 * page 109, colonne de droite, alinéa 3 - page 110, colonne de droite, alinéa 1 * | 1 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 5 juin 1998 | Pottiez, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)